# EUROPEAN PATENT APPLICATION

(11) **EP 4 768 416 A1**
(43) Date of publication of application: **01.07.2026**
(21) Application number: 24223645.3
(22) Date of filing: 30.12.2024
(51) Int. Cl.: B66C 1/10, B66C 13/18

(54) **CONTROL OF FLIPPERS OF A SPREADER CONFIGURED TO LIFT A CONTAINER**

(71) Applicant: ABB SCHWEIZ AG, 5400 Baden (CH)
(72) Inventor: HARKMAA, Mario, 724 63 Västerås (SE); OHR, Jonas, 745 31 Enköping (SE); EDSTRÖM, Olof, 722 22 Västerås (SE)
(74) Representative: Kransell & Wennborg KB

(57) **Abstract**

The present invention generally relates to a computer implemented method for controlling at least one flipper (102) of a spreader (100) configured to lift a container (106), the method comprising: controlling (S102) the at least one flipper arm to move from a down position towards an up position, waiting (S104) for a predetermined time duration, and after the predetermined time duration has lapsed, controlling (S106) the at least one flipper arm to move to the down position.

## Description

### Field of the Invention

The present invention generally relates to a computer implemented method for controlling at least one flipper of a spreader configured to lift a container, to a control unit, to a spreader, and to a computer program product.

### Background

A container spreader is used for lifting containers at their four corners. To assist in a lifting operation of a container, flipper arms of the spreaders assist in aligning the lifting mechanism of the spreader to the lifting points on the containers.

Traditional spreaders use flippers that either remain in a fixed down position during pickup or can stop at intermediate positions to catch containers. The former approach limits operational flexibility, while the latter requires specialized flippers capable of intermediate stops, increasing complexity and costs.

### Summary

In view of the above-mentioned and other drawbacks of the prior art, it is an object of the present invention to provide a method and spreader that at least partly alleviates the drawbacks of prior art.

According to a first aspect of the invention, there is provided a computer implemented method for controlling at least one flipper of a spreader configured to lift a container, the method comprising: controlling the at least one flipper arm to move from a down position towards an up position, waiting for a predetermined time duration, and after the predetermined time duration has lapsed, controlling the at least one flipper arm to move to the down position.

The present invention is at least partly based on the realization to, when approaching a container, first give an up order followed by a brief waiting period during which time duration the flipper arm moves up, and subsequently give a down order. This provides for the flipper arm to "open" slightly to allow for better alignment with the container, followed by a closing of the flipper arm for final alignment.

A spreader is a lifting device commonly used in port and terminal operations for handling intermodal containers. The spreader is typically attached to a crane and is designed to adjust its width to fit various container sizes, ensuring a secure and balanced lift. Equipped with twist locks or other securing mechanisms at each corner, the spreader engages with the container's corner castings, allowing it to lift, move, and place containers efficiently.

A flipper arm is a component of a spreader that assists in positioning the spreader on the container for securing lifting and handling operations. Flipper arms are mounted on the sides of the spreader and can move between up and down positions. In the up position, the flipper arms facilitate the spreader's alignment with the container, while in the down position, they help secure the container by engaging with its sides. For example, the flipper arm contacts the container and guides the spreader so as to align a lock engagement between the spreader and container.

In embodiments, the method may comprise determining a distance between the at least one flipper and the container as the flipper approaches the container, determining that the distance is less than or equal to a threshold distance, controlling the at least one flipper arm in response to that the distance is less than or equal to a threshold distance. This advantageously allows for timing the operation of the flipper as the spreader approaches a container.

The distance between the at least one flipper and the container may be measured by a sensor on the spreader. Thus, accurate determination of the distance may be ensured thereby improving the timing of the flipper movement. The accuracy of the sensor is preferably 5 cm or less.

In embodiments, the threshold distance may be based on the speed of the flipper as it approaches the container. By basing the threshold distance on the speed of the flipper, the timing of the flipper movements can be dynamically adjusted. This ensures that the flippers engage with the container at the optimal moment, enhancing the precision of the container capture process.

In embodiments, the method may comprise receiving a user input, and initiating the controlling of the at least one flipper arm in response to the received user input. In other words, the control of the flipper arms may be manually initiated by an operator inspecting the spreader visually, for example using a camera and a display user interface.
In embodiments, the predetermined time duration may be fixed. A fixed predetermined time duration simplifies the control algorithm, ensuring that the flipper arm movements are consistent each time they are triggered. This consistency can lead to predictable and repeatable operations, which are advantageous for maintaining efficiency and reliability in spreaders. The predetermined time duration is sufficiently long for allowing the flipper arms to open for the spreader to receive the container, and then to close to the down position once the container is in place in the spreader.

The predetermined time duration may be selected in the range of 0.3 seconds to 1.5 seconds, preferably about 0.6 seconds.

Preferably, the method steps are automated once initiated. That is, regardless of whether the operation is automated by using sensors, or is manually initiated by user input, the movement of the flipper up and down is automatic.

Preferably, at least four flipper arms of the spreader are controlled.

In embodiments, the method may comprise providing an alert on a user interface that the flipper arm is about to be automatically controlled. That is, an operator may be made aware of the flipper movement before it is triggered. The method may be implemented in an embedded control system. An embedded control system such as a programmable logic controller, PLC, provides for improved integration with existing systems and control in the spreader.

There is further provided a control unit configured to execute the method of any one of the herein disclosed embodiments.

There is further provided a spreader comprising at least one flipper and a control unit.

There is further provided a computer program product comprising program code for performing the method according to any one of the herein disclosed embodiments, when executed by a control unit.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig. 1 schematically illustrates crane hoisting a spreader according to an embodiment of the invention;
Fig. 2 schematically illustrates control of flippers of a spreader according to embodiments of the present invention;
Fig. 3 is a flow-chart of method steps according to embodiments of the present invention;
Fig. 4 is a flow-chart of method steps according to embodiments of the present invention; and
Fig. 5 is a flow-chart of method steps according to embodiments of the present invention.

### Detailed Description of Example Embodiments

In the present detailed description, various embodiments of the present invention are herein described with reference to specific implementations. In describing embodiments, specific terminology is employed for the sake of clarity. However, the invention is not intended to be limited to the specific terminology so selected. While specific exemplary embodiments are discussed, it should be understood that this is done for illustration purposes only. A person skilled in the relevant art will recognize that other components and configurations can be used without parting from the scope of the invention.

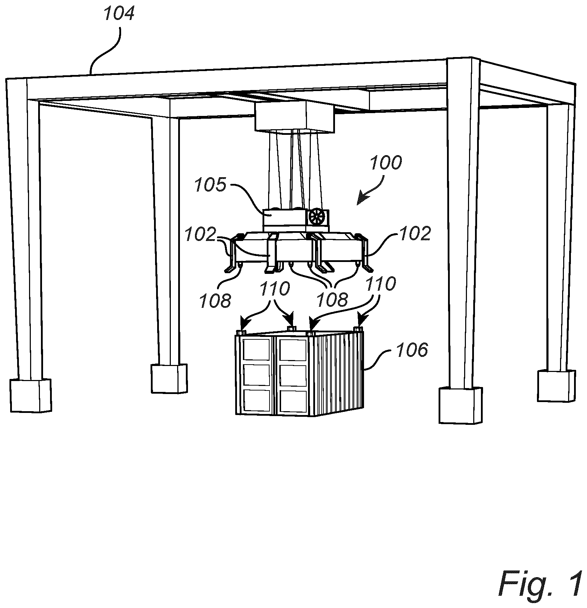

Fig. 1 schematically illustrates a spreader 100 having multiple flipper arms 102. The spreader 100 is attached to a crane 104 via a hoisting mechanism 105 which is configured to lift the spreader up and down for lifting the container 106. The spreader 100 can adjust its width to accommodate for different sized containers.

The spreader 100 includes twist locks 108 which are adapted to lock into corresponding receiving units 110 of the container, often in the form of receiver holes 110. The geometry of the twist locks ensures engagement in the receiving holes 110 once rotated while maintaining inserted in place in the receiving holes 110.

The flippers 102, equally termed flipper arms 102, are mounted on the sides of the spreader 100 and can move between up and down positions. In the up position, the flipper arms 102 facilitate the spreader's 100 alignment with the container 100, while in the down position, they help secure the container 106 by engaging with its sides. I fig. 1, the flipper arms are in their down position as the crane 104 is lowering the spreader 100 towards the container 106.The crane 104 and the spreader 100 may be operated by a crane operator.

Although the number of flipper arms 102 varies depending on the spreader type, in this example the spreader 100 has at least four, in this case six flippers that are controlled according to embodiments of the present disclosure.

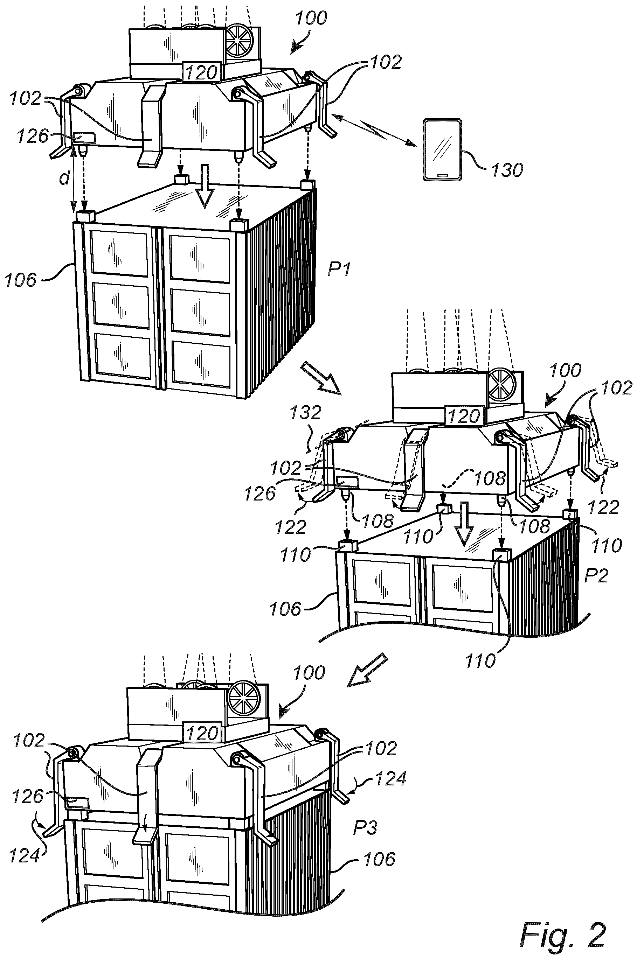

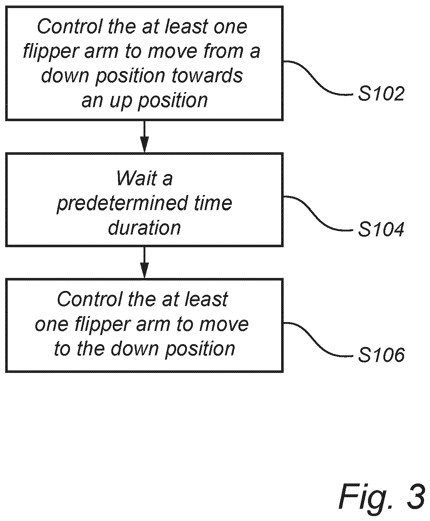

Turning to fig. 2 in conjunction with the flow-chart in fig. 3.

In the position P1 of the spreader 100 in fig. 2, the flippers 102 are in their down position. The spreader 100 is moving downwards towards the container 106.

A control unit 120 is configured to, in step S102, control the at least one flipper arm 102 to move from a down position towards an up position. As shown in position P2 where the spreader 100 is closer to the container compared to position P1, the flipper arms are now moving towards the up position. That is, they are "opening" to facilitate positioning of the container 106.

Once triggering the motion of the flipper arms 102, the control unit 120 waits, in step S104, for a predetermined time duration so that the flipper arms 102 are allowed to move, as indicated by arrows 122, slightly towards the up position, although not to the full up position.

Once the predetermined time duration has lapsed, the control unit 120 controls the at least one flipper arm 102 to move to the down position as indicated in position P3 where the flipper arms 102 has moved in the opposite direction indicated by arrows 124. The motion of the flipper arms 102 is by rotation about a pivot axis at one end of the flipper arms 102. One pivot axis 132 is indicated in fig. 2 position P2.

The predetermined time duration is sufficiently long for allowing the flipper arms to open slightly for the spreader 100 to receive the container 106, and then to close, i.e., move back to the down position once the container is in place. The predetermined time duration may be fixed and selected in the range of 0.3 seconds to 1.5 seconds. In a preferred embodiment the predetermined time duration is about 0.6 seconds.

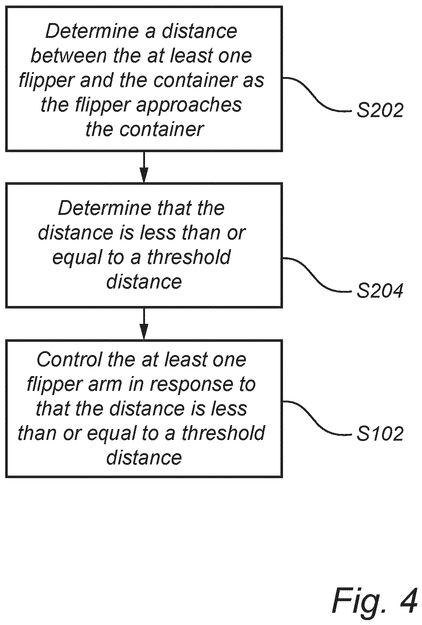

Fig. 4 is a flow-chart of method steps that precedes the steps in fig. 3.

In step S202, determining, by the control unit 120, a distance d between the at least one flipper 102 and the container 106 as the flipper 102 approaches the container 106. The distance d between the at least one flipper 102 and the container 106 is measured by a sensor 126 on the spreader 100. The sensor 126 may be for example ultrasonic sensors or laser based, e.g., Lidar.

In step S204, the control unit 120 determines that the distance is less than or equal to a threshold distance.

In response to that the distance is less than or equal to a threshold distance, the control unit 120 controls the at least one flipper arm to move towards the up position in step S102 described in relation to fig. 2 and 3.

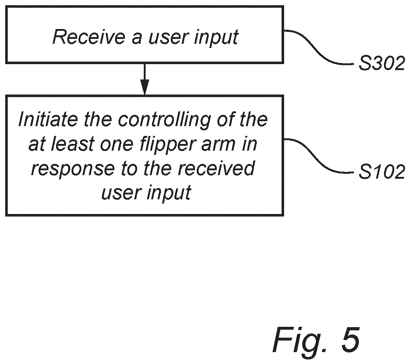

Fig. 5 is a flow-chart of method steps of an alternative embodiment, where in step S302, the control unit 120 receives a user input to trigger the movement of the flipper 102. In this embodiment there is no need for sensors 126. Instead, the operator may visually inspect the lowering of the spreader 100 towards the container 106 and at the right time trigger the movement of the flippers 102.

In response to the received user input the controlling of the at least one flipper arm in step S102 is initiated as described above in conjunction with step S102.

Optionally, an alert is provided on a user interface 130 such as a display or a speaker, that the flipper arm 102 is about to be automatically controlled.

Once the method is initiated, either automatically by detecting that the distance between the at least one flipper and the container is less than or equal to a threshold distance, or by receiver user input, the method steps involving control of the flippers 102 are automated.

The control unit 120 may be implemented in an embedded control system such as a programmable logic controller, PLC.

A control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which correspond to tangible media such as data storage media, or communication media including any media that facilitate the transfer of a computer program from one place to another, e.g., according to a communication protocol. In this manner, computer-readable media generally may correspond to (1) tangible computer-readable storage media which are non-transitory or (2) a communication media such as signal or carrier waves. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer.

Even though the invention has been described with reference to specific exemplifying embodiments thereof, many different alterations, modifications and the like will become apparent for those skilled in the art.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A computer implemented method for controlling at least one flipper (102) of a spreader (100) configured to lift a container (106), the method comprising:
controlling (S102) the at least one flipper arm to move from a down position towards an up position,
waiting (S104) for a predetermined time duration, and
after the predetermined time duration has lapsed, controlling (S106) the at least one flipper arm to move to the down position.

2. The method according to claim 1, comprising:
determining (S202) a distance (d) between the at least one flipper and the container as the flipper approaches the container,
determining (S204) that the distance is less than or equal to a threshold distance,
controlling (S102) the at least one flipper arm in response to that the distance is less than or equal to a threshold distance.

3. The method according to claim 2, the distance between the at least one flipper and the container being measured by a sensor (126) on the spreader.

4. The method according to any one of claims 2 and 3, the threshold distance being based on the speed of the flipper as it approaches the container.

5. The method according to claim 1, comprising:
receiving (S302) a user input, and
initiating the controlling (S102) of the at least one flipper arm in response to the received user input.

6. The method according to any one of the preceding claims, wherein the predetermined time duration is fixed.

7. The method according to claim 6, wherein the predetermined time duration is sufficiently long for allowing the flipper arms to open for the spreader (100) to receive the container (106), and then to close to the down position once the container is in place in the spreader.

8. The method according to any one of the preceding claims, wherein the predetermined time duration is selected in the range of 0.3 seconds to 1.5 seconds, preferably about 0.6 seconds.

9. The method according to any one of the preceding claims, the method steps being automated once initiated.

10. The method according to any one of the preceding claims, wherein at least four flipper arms of the spreader are controlled.

11. The method according to any one of the preceding claims, comprising providing an alert on a user interface that the flipper arm is about to be automatically controlled.

12. The method according to any one of the preceding claims, implemented in an embedded control system.

13. A control unit (120) configured to execute the method of any one of the preceding claims.

14. A spreader comprising at least one flipper and a control unit according to claim 13.

15. A computer program product comprising program code for performing the method according to any one of claims 1-12, when executed by a control unit.
